Europäisches Patentamt

**European Patent Office**

**Office européen des brevets**

(11) Numéro de publication: **0 384 841**

**A1**

# DEMANDE DE BREVET EUROPEEN

(21) Numéro de dépôt: **90400492.6**

(22) Date de dépôt: **22.02.90**

(51) Int. Cl.⁵: **B62D 1/28, G05D 1/03**

(30) Priorité: **22.02.89 FR 8902292**

(43) Date de publication de la demande:
**29.08.90 Bulletin 90/35**

(84) Etats contractants désignés:
**BE CH DE ES GB IT LI**

(71) Demandeur: **AUTOMATISME MANUTENTION SERVICE**
**41 rue Aristide Briand**
**F-77124 Villenoy(FR)**

(72) Inventeur: **Sebillaud, Jean**
**40 Avenue la Fontaine**
**F-94500 Champigny(FR)**

(74) Mandataire: **Thibon-Littaye, Annick**
**Cabinet A. THIBON-LITTAYE 11 rue de l'Etang**
**F-78160 Marly-le-Roi(FR)**

(54) **Installation de manutention à chariot filoguide et procédé de guidage d'un tel chariot.**

(57) La présente invention concerne un chariot de manutention et le procédé de guidage d'un tel chariot.

Le chariot de manutention filoguidé (1) constitué d'un chassis (1) propulsé par deux roues motrices (11, 12), placées à l'arrière du chassis, entraînées par des moteurs électriques (110, 120), et une roue avant (10) montée sur l'axe de symétrie du chariot (1) et pivotant librement par rapport au chassis, deux bobines de guidage (13, 14) disposées symétriquement par rapport à une piste de guidage, caractérisé en ce que la piste de guidage de largeur donnée est alimentée électriquement pour produire un champ magnétique uniforme sur la largeur de la piste et des moyens d'alimenter indépendamment chaque moteur par un signal produisant une vitesse de rotation dépendant de la différence de champs reçus par une bobine par rapport à l'autre lorsque l'avant du chariot est décentré sur la piste.

Fig. 3

Xerox Copy Centre

## INSTALLATION DE MANUTENTION A CHARIOT FILOGUIDE ET PROCEDE DE GUIDAGE D'UN TEL CHARIOT

La présente invention concerne ce que l'on appelle couramment un chariot filoguidé, c'est-à-dire un chariot de manutention guidé par des fils, plus précisément des fils conducteurs électriques propres à définir un trajet du chariot par un champ magnétique. Elle concerne également un procédé de guidage d'un tel chariot, ainsi qu'une installation de manutention conçue pour la mise en oeuvre de ce procédé.

Les installations actuelles à chariot filoguidé définissent une piste de guidage par un fil conducteur électrique unique disposé le long d'un trajet à définir pour un tel chariot ou plusieurs chariots analogues. Le chariot comporte des bobines de détection d'un champ magnétique créé par le fil électrique pour commander un train de roues orientables du chariot de façon à maintenir celui-ci sur le trajet des fils, en assurant que tout au cours du déplacement du chariot, les bobines reçoivent le maximum de champ magnétique créé. Tout écart de l'axe du chariot par rapport à la direction du fil provoque un déséquilibre entre les signaux de détection de champ magnétique produits par les deux bobines du chariot, bobines qui sont disposées symétriquement par rapport à son axe, et ce déséquilibre est rétabli automatiquement par action sur l'orientation des roues.

Ainsi, dans les installations actuelles de ce type, un courant électrique unique parcourt l'installation d'un bout à l'autre, sur un ou plusieurs trajets, éventuellement avec des embranchements, mais dans tous les cas, le retour du courant est assuré hors du trajet du chariot pour ne pas influer sur le champ électromagnétique de guidage, ou du moins convenablement isolé dans ce but du fil conducteur unique qui définit la piste de guidage. Dans ces conditions, il n'est pas possible d'imposer au chariot des itinéraires variables dans l'installation, sans équiper celui-ci de systèmes complexes qui lui soient propres. Par exemple, pour choisir entre deux trajets à fréquences différentes à l'abord d'une bifurcation, il devra posséder un système de détection de position par rapport à des repères annexes de l'installation et disposer d'un ordre déterminant le bon choix, en fonction de la destination affectée au chariot, soit que cet ordre soit préalablement enregistré dans une mémoire propre au chariot, soit qu'il lui soit communiqué par dialogue avec un ordinateur central.

Un premier but de l'invention est donc de proposer une installation à chariot filoguidé où les chariots s'alignent sur l'axe de la piste selon un principe différent, permettant l'utilisation de circuits moins complexes. Dans une telle installation selon l'invention un tronçon de piste de guidage d'un chariot filoguidé est défini par une paire de deux fils de circulation d'un même courant électrique, reliés en boucle à des moyens de commande du courant circulant dans les fils, au moins en tout ou rien, pour créer un champ électromagnétique s'étendant en travers de la piste auquel sont sensibles des moyens détecteurs dont est équipé ledit chariot pour commander son orientation par rapport à la direction desdits fils.

De préférence, l'installation selon l'invention comporte ainsi plusieurs tronçons de piste de guidage analogues, tous commandés sélectivement à partir d'une même centrale extérieure à la piste, de manière à imposer audit chariot un trajet déterminé parmi plusieurs trajets possibles définis par des tronçons successifs.

Naturellement, l'installation peut servir à guider plusieurs chariots simultanément, sur des trajets identiques ou différents, chacun défini comme il vient d'être indique, par commande du courant circulant ou non dans des tronçons de piste successifs, constitués chacun par une paire de deux fils qui sont en général fixés ou noyés dans le sol.

Dans la généralité de l'invention, les courants circulant dans les deux fils d'un même tronçon aux différents points de la piste peuvent être de type continu ou alternatif, avec toutefois une préférence pour le courant alternatif, mais ils sont toujours, avec des sens opposés, identiques en intensité et en fréquence dans chacun des fils. Leurs champs électromagnétiques respectifs se combinent alors en un champ étalé qui présente en général un maximum au milieu de leur écartement, et qui dans tous les cas, est symétrique en puissance par rapport à une ligne centrale qui constitue l'axe virtuel de la piste. Les deux fils peuvent être avantageusement reliés l'un à l'autre à chacune des extrémités du tronçon et reliés l'un à l'autre à chacune des extrémités du tronçons et reliés par leurs extrémités libres du tronçon à un générateur de courant alternatif à partir d'un point quelconque du tronçon. Entre cette extrémité libre et le générateur, les deux fils de liaison sont de préférence placés proches l'un de l'autre, par exemple torsadés l'un avec l'autre ou guidés dans une même gaine, pour que le champ électromagnétique qu'ils créent à ce niveau soit faible en regard de la piste de guidage et que le chariot n'y soit pas sensible.

Par ailleurs, les deux fils conducteurs de chaque tronçon sont en général de préférence équidistants, donc parallèles à écartement constant, selon des trajets quelconques, rectilignes ou courbes. Toutefois, on peut aussi avoir intérêt à, faire varier l'écartement des fils, par exemple d'un tronçon à un autre pour modifier les caractéristiques de guidage liées à la sensibilité des moyens détecteurs de champ magnétique d'un chariot déterminé, ou également le long d'un même tronçon, si l'on souhaite par exemple compenser par une augmentation d'écartement (donc par un plus large étalement du champ) une augmentation de la hauteur des moyens détecteurs par rapport au sol (donc aux fils) au passage d'un plancher intermédiaire ou à l'abord d'un sommet de côte.

Selon des caractéristiques secondaires de l'invention :

- Le chariot de manutention filoguidé est constitué d'un chassis propulsé par deux roues motrices placées à l'arrière du chassis, entraînées par des moteurs électriques, et il comporte une roue avant orientable montée sur l'axe de symétrie du chariot et pivotant librement par rapport au chassis, et deux bobines de guidage disposées symétriquement par rapport à ladite roue orientable, de préférence également à l'avant du chariot.

- Il comporte des moyens pour alimenter indépendamment chaque moteur par un signal produisant une vitesse de rotation différentielle dépendant de la différence de champ reçue par une bobine par rapport à l'autre lorsque l'avant du chariot n'est pas centré sur la piste magnétique associée, celle-ci étant définie sur la longueur de chaque tronçon par deux fils d'une même boucle, alimentée électriquement pour produire pour les moyens détecteurs du chariot un champ magnétique sensiblement symétrique par rapport à un axe de la piste.

Selon une autre particularité de l'invention, les moyens d'alimenter indépendamment chaque moteur sont constitués par un amplificateur différentiel recevant sur chacune de ses deux entrées un signal de tension proportionnel au champ magnétique reçu par chacune des bobines en fonction du décalage de l'axe du chariot par rapport à la piste, un circuit électronique élaborant, à partir du signal de sortie de l'amplificateur différentiel et d'une tension de référence correspondant à une vitesse de consigne, un premier signal de sortie délivrant une tension proportionnelle à la différence entre la tension de référence et le signal de sortie de l'amplificateur différentiel et un deuxième signal de sortie délivrant une tension proportionnelle à la somme de la tension de référence et du signal de sortie de l'amplificateur différentiel.

De préférence, le premier signal de sortie alimente un premier variateur électronique commandant un moteur d'entrainement d'une roue gauche du chariot parmi lesdites deux roues motrices et le deuxième signal de sortie alimente un deuxième variateur électronique commandant un moteur d'entrainement d'une roue droite parmi lesdites deux roues motrices. Le circuit peut avantageusement comporter entre chaque sortie de bobine et chaque entrée de l'amplificateur différentiel un circuit d'accord et un amplificateur.

L'utilisation de ce type de chariot avec le nouveau type de piste selon l'invention permet d'assurer les commandes de déplacement et de destination du chariot à partir d'une centrale générale commandant l'installation de manutention. Ladite piste est avantageusement constituée de tronçons formés chacun par une paire de fils noyés dans le sol et disposés parallèlement à un écartement donné l'un de l'autre pour produire un champ magnétique à maximum dans la zone où les bobines détectrices équipant le chariot sont sensibles à ce champ individuellement.

Selon une autre particularité, chaque tronçon est alimenté par deux fils torsadés ou juxtaposés véhiculant un courant alternatif de faible intensité, fourni par la sortie d'un amplificateur alimenté par un générateur de fréquence lui-même commandé par la centrale ou automate général de l'installation de manutention.

Un autre but de l'invention est de proposer un procédé de guidage et de commande de déplacement d'un chariot à partir de la centrale ou automate général de l'installation de manutention. Ce but est atteint par le fait que le procédé de guidage d'un chariot sur une piste constituée de plusieurs tronçons consiste à commander par l'automate général de l'installation de manutention, l'alimentation successive et sélective de chaque tronçon en fonction du trajet parcouru par le chariot et du trajet à lui imposer.

D'autres caractéristiques et avantages de l'invention apparaîtront plus clairement à la lecture de la description ci-après, qui concerne un mode de réalisation particulier et non limitatif d'un chariot selon l'invention et d'une installation associée et qui est faite en référence aux dessins annexés où :

- la figure 1 représente une vue latérale d'un chariot de manutention filoguidé selon l'invention ;

- la figure 2 représente une vue de dessus du même chariot filoguidé ;

- la figure 3 représente la constitution d'une piste de guidage pour un chariot selon l'invention ;

- la figure 4 représente la constitution d'un tronçon de piste ;

- la figure 5 représente une vue en coupe d'un tronçon de piste associé avec les bobines de commande du guidage du chariot ;

- la figure 6 représente une vue du dessus des bobines par rapport à la piste de guidage ;

- la figure 7 représente le schéma électrique du circuit de commande assurant le guidage du chariot par rapport à la piste.

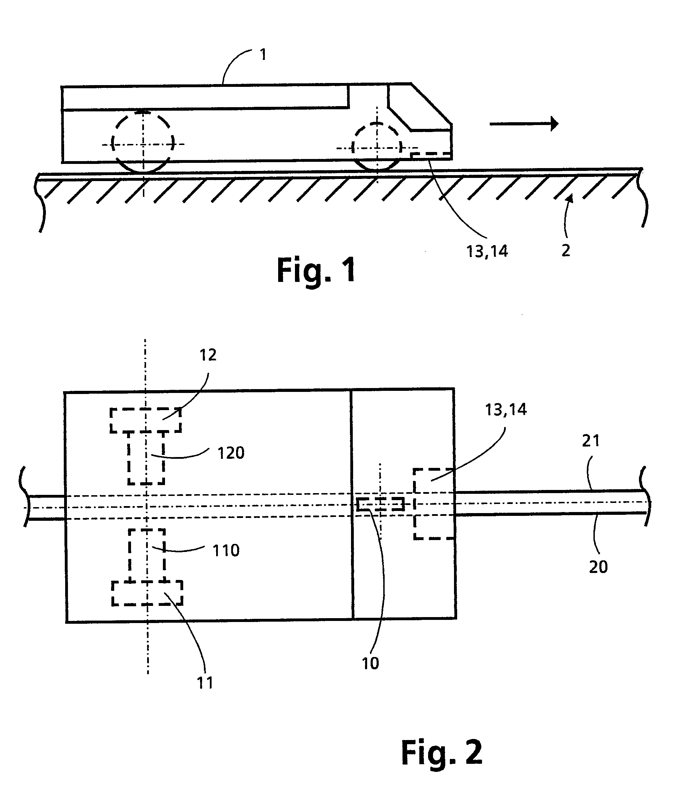

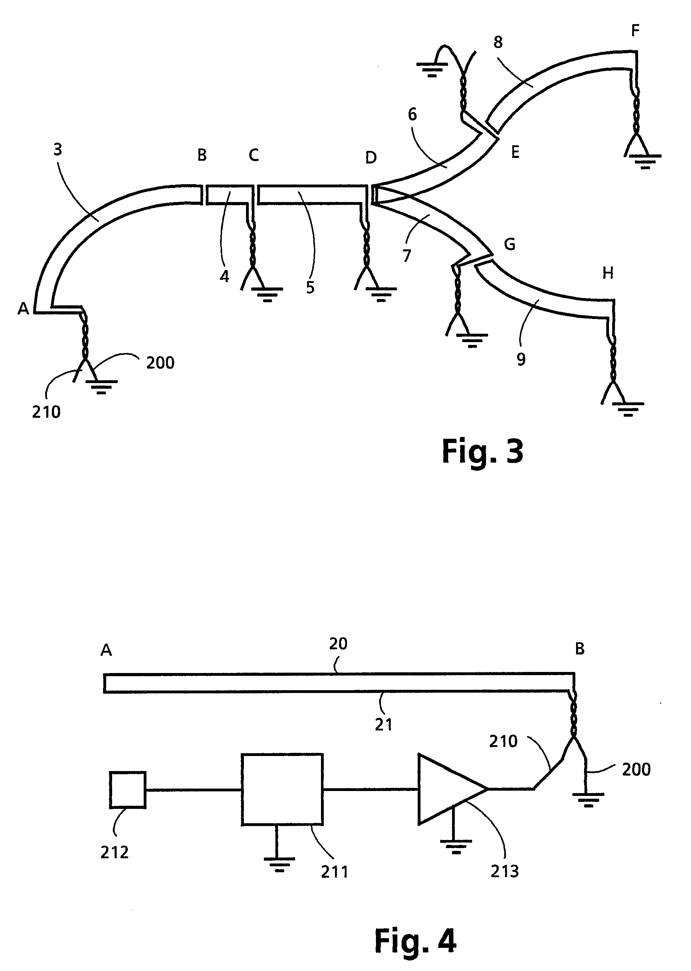

Le chariot selon l'invention est représenté sur les figures 1, 2, en position de déplacement sur un sol 2. Il comporte un chassis 1 à une extrémité duquel est montée, sur un axe de symétrie longitudinal de ce chassis, une roue 10 pivotant librement, qui constitue la roue avant orientable du chariot.

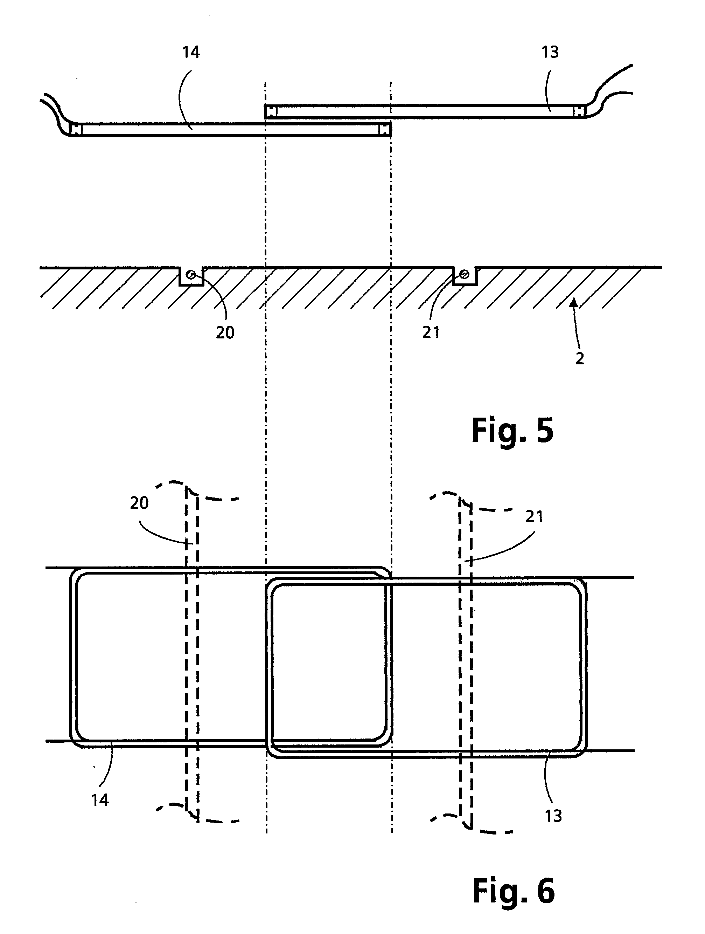

A l'avant de cette roue 10 sont montées, à proximité de la face inférieure du chassis qui se trouve en vis-à-vis du sol, deux bobines 13, 14 de détection de champ magnétique, positionnées pour être sensibles au champ magnétique produit par une piste de guidage constituée par deux fils 20, 21 noyés dans le sol 2, comme on peut le voir à la figure 5.

Ce chariot 1 est propulsé par deux moteurs qui commandent respectivement deux roues motrices distinctes de la roue avant orientable et situées à l'arrière du chariot de part et d'autre de son axe de symétrie, soit un moteur droit 110 qui entraîne la roue droite 11 et un moteur gauche 120 qui entraîne une roue gauche 12.

Les bobines de guidage du chariot 13, 14 (figures 5 et 6) qui permettent de détecter le champ magnétique créé par les fils 20, 21 noyés dans le sol 2, sont disposées chacune à plat horizontalement dans sensiblement le même plan, symétriquement par rapport à un axe d'orientation du chariot, et de façon qu'une partie d'une bobine 13 se superpose à une autre partie de l'autre bobine 14.

L'écartement des fils est étudié de façon à ce que le champ magnétique produit par ces fils en liaison avec le courant qui y circule permette d'avoir un système sensible et peu influencé par les variations de hauteur des bobines par rapport aux fils lorsque la roue avant passe, par exemple, sur des obstacles. En pratique, les bobines de la figure se trouvent en fait à une distance du sol (donc des fils) qui est de l'ordre de 0,5 à 1 fois l'écartement entre les deux fils parallèles.

La figure 3 représente un schéma de principe d'une piste constituée d'un ensemble de tronçons 3, 4, 5, 6, 7, 8, 9, où chacun des tronçons élémentaires AB, BC, CD, DE, EF, DG, GH est constitué d'un ensemble de deux fils parallèles 20, 21 (figure 4) d'une même boucle électrique, qui sont reliés entre' eux à une extrémité et qui sortent à l'autre extrémité de la piste sous la forme d'une torsade 200, 210 dont un élément 200 est relié à la masse du générateur et l'autre élément 210 à la sortie d'un amplificateur 213 qui délivre un courant électrique alternatif, sous une intensité qui est par exemple de l'ordre de 0,3 Ampère dans le cas décrit d'une application particulière.

L'amplificateur 213 reçoit la sortie d'un générateur de fréquence 211, fonctionnant par exemple à une fréquence de 10 Khz. Ce générateur de fréquence 211 est commandé par la sortie d'un automate 212 qui permet de commander et de gérer l'ensemble de l'installation. Lorsque la sortie 212 commande le générateur de fréquence 211, le tronçon AB est alimenté et les fils parallèles (20, 21) produisent donc un champ magnétique qui permet au chariot de s'orienter et de se déplacer le long de ce champ quand il se trouve sur ce tronçon.

Dans la partie (BJ), les fils (200, 210) étant torsadés entre eux, et se trouvant très proches l'un de l'autre, il n'y a presque pas ou peu de champ émis.

La piste peut donc être constituée d'un ensemble de tronçons (AB, BC, CD, DE, EF, DG, GH) qui se trouvent alimentés sélectivement sous la commande des différentes sorties de l'automate 212 qui gère l'ensemble de l'installation de manutention.

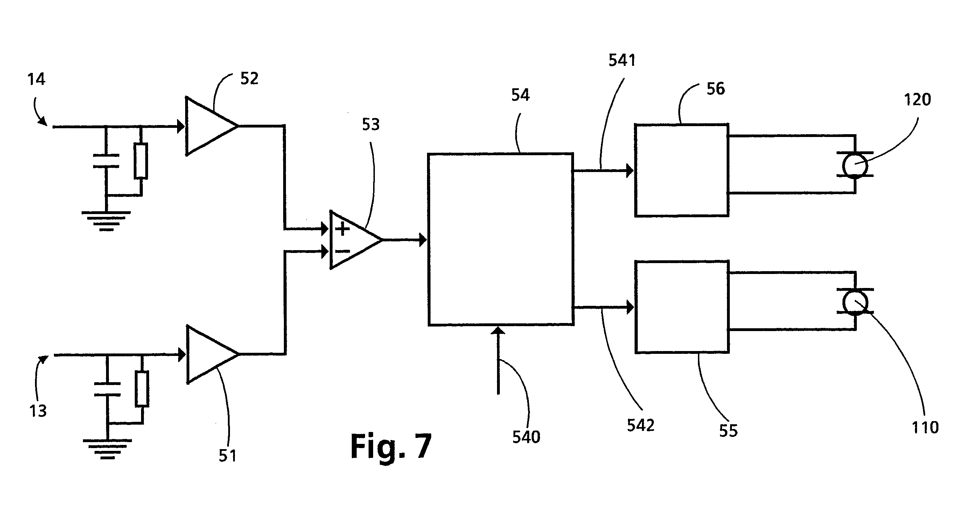

La figure 7 représente le schéma du circuit électronique qui permet l'alimentation des moteurs de propulsion du chariot en fonction des variations de champ détectées par les deux bobines.

Grâce au fait que l'on utilise des bobines larges associées à une bande de champ suffisamment large englobant les deux fils, ainsi que des bobines qui se superposent au centre de la piste, on peut aisément commander le recentrage permanent du chariot sur la piste. Lorsque le chariot commet un écart, par exemple de quelques millimètres par rapport à la piste, les bobines détectent une variation de champ qui commande par le circuit électronique de la figure 7 une modification de l'orientation du chariot pour le ramener dans l'axe de la piste. Quand il y a équilibre entre les deux signaux de détection, le chariot avance parallèlement à la piste. Quand le champ détecté devient négligeable sur l'une et l'autre bobines, ceci commande un arrêt d'urgence du chariot.

Le circuit électronique de la figure 7 reçoit sur une entrée la tension de la bobine gauche 14 proportionnelle au champ magnétique détecté et sur une autre entrée la tension de la bobine droite 13 proportionnelle au champ magnétique détecté par celle-ci. Chaque tension est envoyée sur chaque voie à l'entrée d'un amplificateur (51, 52) après être passée par un circuit d'accord respectif (58, 59).

La sortie respective de chaque amplificateur (51, 52) est envoyée sur chacune des deux entrées d'un amplificateur différentiel (53). La sortie de l'amplificateur différentiel (53) produit un signal électrique qui correspond à l'écart de position latérale des bobines par rapport à leur position théorique. Ainsi, si le nez du véhicule se déporte trop à droite la bobine gauche reçoit plus de champ et la bobine droite un peu moins, ce qui rend le signal de sortie de l'amplificateur (53) positif et proportionnel à cet écart.

Ce signal est envoyé à l'entrée d'un circuit différentiel électronique dont une autre entrée (540) reçoit une tension (V) proportionnelle à la consigne de vitesse donnée au véhicule.

Une première sortie (541) du circuit différentiel produit un signal proportionnel à la tension (V) diminuée du signal d'écart et une deuxième sortie (542) produit un signal proportionnel à la tension (V) augmentée du signal d'écart. La sortie (541) est envoyée au variateur électronique, pour le moteur gauche (56) qui alimente en conséquence le moteur (120) de la roue gauche. Ce signal contribue donc dans ce cas de figure à ralentir le moteur gauche.

L'autre sortie (542) est envoyée à un variateur électronique pour alimenter le moteur droit (110). Le signal provenant de (542) contribue dans ce cas à accélérer le moteur droit, ce qui a pour effet de corriger le défaut de positionnement du véhicule et par suite, lorsque les deux champs électriques détectés deviennent égaux, les deux moteurs sont entraînés à la vitesse de consigne. De ce fait le chariot de manutention reste aligné avec le fil.

Lorsqu'on arrive en fin de tronçon (AB) l'automate de gestion de l'ensemble de l'installation de manutention commande l'alimentation du deuxième tronçon correspondant à la partie (BC, figure 3) pour que le chariot continue sa trajectoire le long du tronçon (BC).

De la même façon, quand le chariot arrive à proximité du tronçon (CD), l'automate commande l'alimentation du tronçon (CD) de façon à ce que le chariot poursuive sa route le long du tronçon (CD).

A l'abord d'une bifurcation, illustrée dans l'exemple de réalisation décrit par les tronçons (DE) et (DG), l'automate orientera le chariot sur un de ces deux tronçons en fonction de la commande d'alimentation de l'un ou l'autre qu'il produira.

On comprend donc que de cette façon on a réalisé un aiguillage piloté par le circuit au sol. De la même façon on peut arrêter le chariot de manutention en évitant d'alimenter le tronçon suivant lorsque le chariot arrive en bout d'un tronçon. Lorsqu'un tronçon n'est pas alimenté le chariot s'arrête à l'extrémité du dernier tronçon alimenté ; dès que le tronçon suivant est alimenté le chariot repart.

Il ressort de l'ensemble de la description qui précède que l'invention permet, par un système de commande simple, de déterminer sélectivement l'avance et l'arrêt du chariot aussi bien que sa bifurcation à un aiguillage, et ce directement à partir de l'automate, sans avoir à faire intervenir des ordres communiqués au chariot lui-même. Le système de transmission d'informations éventuelles entre le chariot et l'automate central s'en trouve considérablement simplifié. Ceci résulte de l'exploitation rendue possible du champ magnétique créé par deux fils parallèles et de la division du trajet imposé au chariot en tronçons successifs séparés où les deux fils assurent l'aller et le retour du courant électrique d'une même boucle.

Il est à relever que contrairement aux installations de type connu à fil de guidage unique, où les bobines de détection de champ magnétique sont le plus souvent situées à proximité immédiate d'une roue motrice du chariot et montées avec elle sur une tourelle pivotante, celles du chariot décrit sont placées au voisinage d'une roue porteuse pivotant librement, de préférence à l'avant du chariot, alors que les roues motrices commandées en vitesse différentielle de rotation sont placées à distance, notamment à l'arrière du chariot. Ceci permet une exploitation optimale des champs magnétiques combinés créés ici par les deux fils parallèles lors de la détection par les bobines du chariot.

Toutes modifications que l'homme de métier pourrait apporter aux particularités du mode de réalisation particulier décrit ci-dessus font également partie de l'esprit de l'invention. On notera en particulier que la commande différentielle de moteurs en fonction de la détection pourrait agir directement sur l'orientation des roues directrices du chariot par rapport à son axe plutôt que sur la vitesse d'une ou plusieurs roues motrices. On notera aussi que les deux fils reliés en boucle pourraient être interrompus en tous points du tronçon, plutôt qu'en son extrémité pour être reliés par là au générateur de courant alternatif par des fils de liaison juxtaposés l'un à l'autre.

Par ailleurs, la présence des deux fils de guidage apporte de nombreuses facilités qui étaient interdites auparavant. En particulier, une variation de l'écartement des fils d'un tronçon à l'autre ou au sein d'un même tronçon permet de régler la sensibilité du guidage du chariot. Il peut également être utile de modifier d'un tronçon à l'autre les intensités d'alimentation, afin de créer localement des conditions de guidage différentes ou d'introduire des informations au chariot par une modulation du courant, en intensité ou en fréquence, qui ne perturberait pas le système de guidage.

**Revendications**

1. Installation de manutention à chariot filoguidé, caractérisée en ce qu'elle comporte au moins un tronçon de piste de guidage pour un chariot filoguidé, définie par une paire de deux fils conducteurs (20,21) disposés de part et d'autre d'un axe de ladite piste et reliés en boucle a des moyens de commande d'alimentation en courant électrique circulant dans les fils, au moins en tout ou rien, de sorte que ceux-ci soient parcourus chacun par un courant de même intensité mais de sens opposé, pour créer un champ magnétique s'étendant en travers de ladite piste auquel sont sensibles des moyens détecteurs dont est équipé ledit chariot pour commander son orientation par rapport à l'axe de ladite piste.

2. Installation selon la revendication 1, caractérisée en ce qu'elle comporte plusieurs tronçons de piste de guidage analogues, tous commandés sélectivement à partir d'un même automatisme central extérieur à la piste de manière à imposer audit chariot un trajet déterminé parmi plusieurs trajets possibles définis par des tronçons successifs comportant chacun une paire de fils conducteurs formant une boucle différente.

3. Installation selon la revendication 1 ou 2, caractérisée en ce qu'elle comporte au moins un chariot filoguidé dans lequel lesdits moyens détecteurs de champ magnétique comportent deux détecteurs (13,14), disposés symétriquement par rapport à un axe du chariot sur la piste de guidage pour détecter par la puissance de champ magnétique qu'ils reçoivent respectivement tout écart latéral du chariot par rapport à l'axe de la piste et le corriger par action sur au moins une roue directrice pour commander son orientation et maintenir ainsi le chariot centré sur la piste de guidage.

4. Installation selon l'une quelconque des revendications 1 à 3, caractérisée en ce que lesdits deux fils (20,21) d'un tronçon déterminé sont disposés au sol, à écartement sensiblement constant, en ce qu'ils se connectent en boucle l'un à l'autre et sont reliés à un générateur (211) de courant alternatif, de sorte que le courant les parcourant a la même intensité et la même fréquence, et qu'ils définissent entre eux un axe de la piste de guidage où le champ magnétique est maximum.

5) Installation selon la revendication 4 caractérisée en ce qu'elle comporte entre ledit générateur et ledit tronçon des fils de liaison qui sont situés proches l'un de l'autre, de sorte que le champ magnétique résultant soit négligeable par rapport au champ de guidage détectable par lesdits moyens détecteurs.

6) Installation selon la revendication 4 ou 5 caractérisée en ce que lesdits moyens détecteurs sont constitués par deux bobines (13, 14) disposées à plat, sensiblement dans un même plan horizontal du chariot en déplacement sur le sol et en ce qu'elles présentent une zone centrale de recouvrement.

7) Installation selon l'une quelconque des revendications 1 à 6 caractérisée en ce que ledit chariot comporte des moyens pour commander son arrêt , en l'absence de champ magnétique détecté par lesdits moyens détecteurs.

8) Chariot de manutention filoguidé pour une installation selon l'une quelconque des revendications 1 à 7, caractérisé en ce qu'il comporte un chassis (1) propulsé par deux roues motrices (11,12) placées à l'arrière du chassis au moins une roue porteuse avant (10) pivotant librement sur le chassis, disposé symétriquement par rapport à un axe du chariot, et en ce que lesdits moyens de commande d'orientation comportent des moyens pour imposer auxdites roues motrices une vitesse différentielle de rotation dépendant des champs magnétiques reçus par deux détecteurs (13,14) à l'avant du chariot

9) Chariot selon la revendication 8 caractérisé en ce qu'il comporte des moyens d'alimenter indépendamment chacun des deux moteurs (120, 110) d'entraînement respectif de chacune desdites deux roues motrices, et en ce que ces moyens sont constitués par un amplificateur différentiel (53) recevant sur chacune de ses deux entrées un signal de tension proportionnel au champ électromagnétique reçu par chacune des bobines (13,14) en fonction du décalage de l'axe du chariot par rapport à la piste, un circuit électronique (54) élaborant à partir du signal de sortie de l'amplificateur différentiel (53) et d'une tension de référence correspondant à une vitesse de consigne, un premier signal de sortie (541) délivrant une tension proportionnelle à la différence entre la tension de référence et le signal de sortie de l'amplificateur différentiel et un deuxième signal de sortie (542) délivrant une tension proportionnelle à la somme de la tension de référence et du signal de sortie de l'amplificateur différentiel.

10) Chariot selon la revendication 9, caractérisé en ce que le premier signal de sortie (541) alimente un premier variateur électronique (56) commandant le moteur (120) de la roue gauche (12) et le deuxième signal de sortie (542) alimente un deuxième variateur électronique (55 commandant le moteur (110) de la roue droite (11).

11) Procédé de guidage d'un chariot filoguidé dans une installation selon l'une quelconque des revendications précédentes sur une piste constituée de plusieurs tronçons, caractérisé en ce qu' il consiste à commander par une centrale ou automate général de l'installation, l'alimentation successive et sélective de chaque tronçon en fonction du trajet parcouru par le chariot et du trajet à lui imposer.

**Fig. 1**

**Fig. 2**

**Fig. 3**

**Fig. 4**

**Fig. 5**

**Fig. 6**

EP 0 384 841 A1

**Fig. 7**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 220 467 (SCHIEFERDECKER)<br>* Page 1; page 3, paragraphes 2,3; page 4, paragraphe 3; page 5, paragraphe 3; page 8, paragraphe 3; revendications 1,2,5,6,7,11; figures 4,6,8 * | 1,2,5,7,8,11 | B 62 D   1/28<br>G 05 D   1/03 |
| A | PATENT ABSTRACTS OF JAPAN, vol. 8, no. 137 (P-282)[1574], 26 juin 1984; & JP-A-59 38 811 (TOKYO SHIBAURA DENKI K.K.) 02-03-1984<br>* Résumé * | 1,3,6 | |
| A | GB-A-1 221 705 (JUNGHEINRICH)<br>* En entier * | 1,2 | |
| A | PATENT ABSTRACTS OF JAPAN, vol. 8, no. 192 (P-298)[1629], 4 septembre 1984; & JP-A-59 81 709 (ZENERARU K.K.) 11-05-1984 | 1,3,4,6,9 | |
| A | DE-A-2 046 924 (BÜRO PATENT)<br>* Page 2, paragraphe 3; figure 3 * | 3,8,9 | DOMAINES TECHNIQUES RECHERCHES (Int. Cl.5) |
| A | US-A-4 658 928 (SAMSUNG CO.)<br>* Colonne 4, ligne 34 - colonne 5, ligne 2; figures 4,5 * | 3,10 | B 62 D<br>G 05 D |

Le présent rapport a été établi pour toutes les revendications

| Lieu de la recherche | Date d'achèvement de la recherche | Examinateur |
|---|---|---|
| LA HAYE | 22-05-1990 | TOPP-BORN S. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)